# EUROPEAN PATENT SPECIFICATION

(11) **EP 1 367 214 B1**
(45) Date of publication and mention of the grant of the patent: **23.11.2005**
(21) Application number: 03253182.4
(22) Date of filing: 21.05.2003
(51) Int. Cl.: E21B 10/56

(54) **Polycrystalline diamond cutters with enhanced resistance**
Polykristalline Diamant-Schneidelemente mit erhöhter Festigkeit
Eléments de coupe en diamant polycristallin présentant une meilleure résistance

(30) Priority: 21.05.2002 US 382209 P
(43) Date of publication of application: 03.12.2003
(73) Proprietor: Diamond Innovations, Inc., Worthington, OH 43085 (US)
(72) Inventor: Snyder, Shelly R., Millersport, Ohio 43046 (US); Raftery, Therese M., Dublin, Ohio 43016 (US)
(74) Representative: Gordon, Naoise Padhraic Edward

(56) References cited:
- US-A- 4 373 934
- US-A- 5 151 107

## Description

The present invention relates to superhard cutting elements as machine-wear resistant materials. Specifically, this invention relates to polycrystalline diamond and cubic boron nitride cutting elements useful in rock drilling.

Abrasive compacts are used extensively in cutting, milling, grinding, drilling and other abrasive operations. The abrasive compacts typically consist of polycrystalline diamond and / or cubic boron nitride (CBN) particles bonded into a coherent hard conglomerate. Abrasive compacts are made under high temperature and pressure conditions at which the abrasive particle, be it diamond or cubic boron nitride, is crystallographically stable. Composite compacts have found special utility as cutting elements or cutters in drill bits.

Drill bits for use in rock drilling, machining of wear resistant materials, and other operations which require high abrasion resistance or wear resistance generally consist of a plurality of polycrystalline abrasive cutting elements fixed in a holder. See U.S. Pat. Nos. 4,109,737 and 5,379,854, which describe drill bits with a tungsten carbide stud (substrate) having a polycrystalline diamond compact on the outer surface of the cutting element. A plurality of these cutting elements then are mounted generally by interference fit into recesses into the crown of a drill bit, such as a rotary drill bit.

In the prior art, attempts to improve the impact resistance of polycrystalline diamond cutters have focused on one of several methods. European Patent No. EP 0546725 discloses the use of large diamond crystal in the PCD matrix for PCD cutting tools with high impact resistance. This method has improved impact resistance but at the expense of a markedly lower abrasion resistance.

Another approach has been aimed at minimizing of the residual stress state between the polycrystalline diamond cutter and the substrate to which it is bonded, typically tungsten carbide, by modification of the geometry of the substrate (see, for example, U.S. Patent Nos. 5,875,862; 5,351,772; 6,029,760; and 5,829,541).

In yet another method, the particle size distribution of the polycrystalline diamond powder is modified prior to sintering to achieve impact resistance (U.S. Patents Nos. 5,135,061 and 5,607,024). This method, however, is at the expense of significantly reducing the abrasion resistance of the cutting element.

U.S. Patent No. 4,373,934 discloses an aggregated abrasive particle comprising diamond particles having a largest dimension inferior to 75 microns, a toughness index corresponding to 69% of equivalent sized metal bond diamond and a volume ratio in the range of 1:20 to 4:1 preferably 2:1 to 4:1.

Applicants have found that the performance of the cutting element, specifically, the impact resistance, can be improved by manipulation of the physical properties of the diamond crystals, specifically the particle size distribution, the aspect ratio, and the crystal toughness, while still maintaining desirable abrasion resistance properties.

The invention relates to a pre-sintered diamond for use in cutting elements, having characteristics of a large single crystal as disclosed in claim 1.

The invention also relates to a method to improve the impact resistance of cutting elements by the use of diamond crystals having a particle size distribution of greater than about 60 micron, an aspect ratio of greater than about 0.80, and high toughness index crystals of about 50 or more.

The invention will now be described in greater detail, by way of example, with reference to the drawings, in which:-
Figure 1 is a SEM micrograph showing one embodiment of the invention, with diamond crystals having a largely well defined cubo-octahedral shape.
Figures 2A is a SEM micrograph showing the highly dense matrix of one embodiment of the invention, employing the diamond crystals.
Figure 2B is a SEM micrograph showing the matrix of the traditional sintered diamond crystals of the prior art.
Figure 3A shows the cutting element of the prior art after an impact resistance test at 10X.
Figure 3B shows one embodiment of the cutting element of the invention, after an impact resistance test, at 10X.

The invention relates to cutting elements for machine wear materials, including rotary drill bits for use in drilling or coring holes in subsurface formations. The invention may be applied to a number of different kinds of rotary drill bits, including drag bits, roller cone bits and percussion bits.

By way of example, the invention will be primarily described in relation to a cutting element which comprises a preform element, often in the form of a circular tablet, including a cutting table of superhard material having a front cutting face, a peripheral surface, and a rear face, the rear face of the cutting table being bonded to a substrate of material which is less hard than the superhard material.

The cutting table usually comprises diamond crystals, although other superhard materials are available and may be used, such as cubic boron nitride. The substrate of less hard material is often formed from cemented tungsten carbide, and the cutting table and substrate are bonded together during formation of the cutting element in a high pressure, high temperature forming press. This forming process is well known and will not be described here. The preform cutting element may be directly mounted on the bit body or may be bonded to a carrier disc, for example also of cemented tungsten carbide, the carrier being in turn received in a socket in the bit body. The bit body may be machined from metal, usually steel, or may be formed from an infiltrated tungsten carbide matrix by a powder metallurgy process.

In one embodiment, the substrate may be formed by joining together two or more disparate carbide discs in the HTHP sintering process to form the PCD cutter. The carbide discs may vary from each other in binder content, carbide grain size, or carbide alloy content. In another embodiment, the carbide discs may be selected and arranged, therefore, to produce a gradient of materials content in the substrate which modifies and provides the properties for the cutting table.

The diamond clusters forming the cutting table are produced by a method which provides a source of carbon and a plurality of growth center particles, each growth center particle comprising a bonded mass of constituent particles, producing a reaction mass by bringing the carbon source and the growth center particles into contact with a solvent/catalyst, subjecting the reaction mass to conditions of elevated temperature and pressure suitable for crystal growth and recovering a plurality of the diamond clusters, as discrete entities, from the reaction mass. The carbon source may be graphite, HPHT (high pressure high temperature) synthetic diamond, chemical vapor deposited (CVD) diamond or natural diamond, or a combination of two or more thereof or other carbon sources known in the art.

Diamond crystals are commercially available from a number of suppliers including, for example, General Electric Company, DeBeers Industrial Diamond Division, or Dennis Tool Company. Typical diamond used in PCD synthesis has a TI of < 45, aspect ratios of ~0.7, and a broad PSD centered around 30 microns.

Applicants have found that during the HPHT process, selection of the diamond crystal's physical properties allows targeting of the dimensional, mechanical, and thermal properties of the HPHT compact. Specifically, Applicants have found a method to improve the impact resistance of a cutting tool by manipulation of the physical properties of the diamond, e.g., the diamond particle size distribution (PSD), aspect ratio, and crystal toughness, to optimize the packing density and sinterability of the diamond after high temperature and pressure sintering.

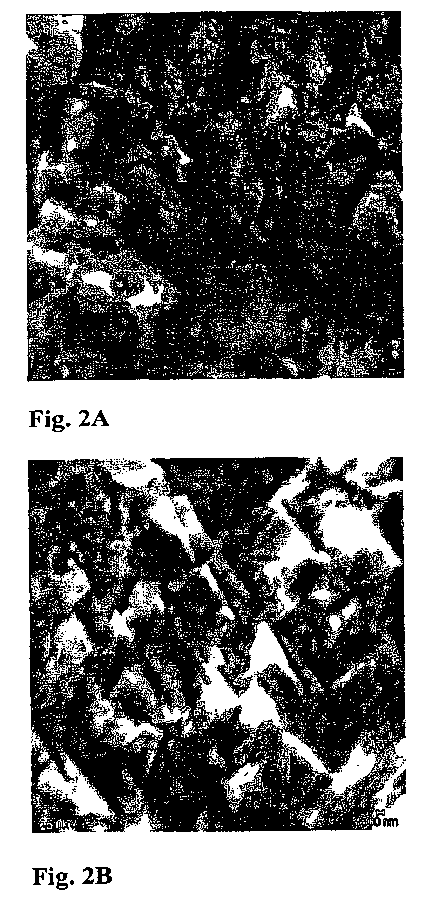

In one embodiment of the invention, the post sintered PCD of this invention contains whole crystals bonded together in a highly dense matrix as shown in the Fig. 2A, unlike the traditional sintered PCD, as shown in Fig. 2B, which is amorphous in structure.

Particle Size Distribution ("PSD"). The fabrication of the diamond compact can be influenced by the porosity of the compact, which can be controlled in a number of ways. For example, the particle size distribution (PSD) of the precursor particulate diamond can be varied to adjust the porosity of the compact formed during the HPHT process. As a general rule, a very narrow PSD will give a much more porous structure than a wide PSD which has been optimized for maximum packing (e.g., particles having diameters ranging from tens of microns to submicron sizes).

In one embodiment of the present invention, PCD toughness is imparted through the use of single crystal diamond with a PSD of > 50 microns. In a second embodiment, the diamond crystals have a PSD of about 60-100 microns. In a third embodiment, the diamond crystals have a PSD in the range of about 70 to 90 microns. In yet a fourth embodiment, the PSD is ≥ 75 microns. In a fifth embodiment, the PSD is ≤ 95 microns.

Aspect Ratio. The diamond crystals in the present invention have relatively large aspect ratios. In one embodiment of the invention, the diamond crystals have an average aspect ratio ≥ 0.80. In a second embodiment, the aspect ratio is ≥ 0.85. In a third embodiment, the average aspect ratio is > 0.87.

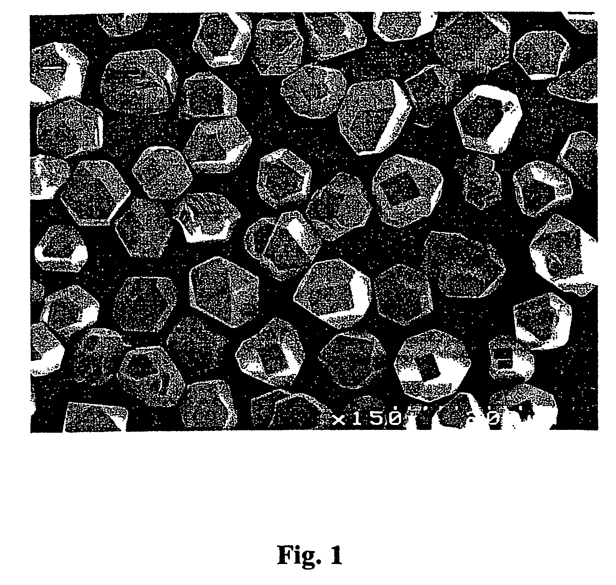

In one embodiment of the invention, the diamond crystals have largely well defined cubo-octahedral shapes as shown in Fig. 1. In a second embodiment, the crystals may have a large aspect ratio in various shapes, including ellipsoids. In a third embodiment, the crystals are essentially two dimensional such as laminas and/or flakes. In yet another embodiment, the crystals are essentially one dimensional, e.g. rods, fibers and/or needles.

Crystal Toughness. Diamond crystal toughness is indicated by the toughness index "TI." TI is measured by placing 2 carats of material in a capsule with a steel ball, agitating it vigorously for a fixed amount of time, and measuring the weight of fragments produced of a certain size with respect to a certain starting weight of a certain size. The size of the steel ball employed and the agitating time vary with the size of the diamond abrasive grains. In one example, a certain amount of material which has passed a 139 µm-mesh screen and was retained on a 107 µm-mesh screen, corresponding the size 120/140, is put together with a steel ball of 7.94 mm in diameter in a 2 ml-capsule, set on a vibration tester, and subjected to milling for a certain time period (30.0±0.3 seconds), followed by screening with a 90 µm-mesh screen. The amount of the crystals remained on the 90 µm-mesh screen is expressed as a weight percent based on the starting crystals.

In one embodiment of the present invention, improved impact resistance is imparted through the use of diamond crystals with a high toughness index with TI values of greater or equal to about 50. In a second embodiment, the diamond crystals are characterized as having a TI of greater than or equal to about 55. In a third embodiment, the diamond crystals are characterized as having a TI or greater than or equal to about 60.

Other parameters. In one embodiment of the invention, the impact resistance and abrasion resistance may also be additionally adjusted means known in the art, for example adding cobalt to the polycrystalline diamond particles has the effect of increasing the impact resistance of the composition.

In one embodiment of the invention, the diamond body constitutes >30 volume % and the binder-catalyzing material constitutes < 70 volume % of the cutting element. In another embodiment of the invention, the cutting element comprises > 50% by volume large single crystal diamonds of > 30 microns. In yet another embodiment, the volume density of the diamond in the cutter body is greater than about 70 volume %. In yet another embodiment of the invention, experimental data show the new high performance cutter has 50% improvement in impact resistance over a cutter in the prior art.

The PCD cutting element of the invention can be used on a drill bit for use in drilling or coring holes in rock surfaces. In yet another embodiment, it can be in the form of a triangular, rectangular, or other shaped material for use as a cutting insert in machining operations. In yet a third embodiment, it can be used for other applications such as hollow dies, friction bearings, indentors for surface roughening, and the like. It should be understood that applications for polycrystalline diamond requiring high impact resistance in combination with excellent abrasion resistance would benefit from a cutting element employing the diamond crystals of the present invention.

EXAMPLE. The examples below are merely representative of the work that contributes to the teaching of the present invention, and the present invention is not to be restricted by the examples that follow.

High grade MBG crystals available from General Electric Company of Worthington, OH, having a TI value of 67 and cubo-octahedral shaped diamonds having aspect ratio ~0.97, and with a PSD centered on 80 micron diameter are used. The diamond crystals are used to synthesize PCD cutters on 14% cobalt containing tungsten carbide substrate into various cylinders with sizes ranging from 9-22 mm diameter and 3-25 mm height. The cubo-octahedral shaped diamonds occupy ~10% less volume than diamond particles of a lower aspect ratio. Upon compaction, the diamond shifts to a tri-modal PSD with peaks at 60, 20, and 1 micron.

For comparative tests, standard cutters of the same sizes as available from General Electric Company of Worthington, OH, under the trade name TITAN are used.

Abrasion, impact, and Parkson Mill data are measured on the sintered cutter of the invention and the standard cutters of the prior art, and are presented below.

*Impact data:* The impact drop test is to measure the toughness of the cutter with respect to the thickness feed type and interface / tungsten carbide features /composition. All parts tested have a carbide chamfer of greater than about 0.2 mm, less than 1.0 mm radial or 45° on the locating base. In the test, the cutter (sharp edge) is mounted securely in a steel holder at an angle of 20 deg. The diamond table is clear of the holder (clamping forces). A steel striker plate is rested on the diamond table (one point of contact on the diamond with the plate being supported by sponge). A 35 lb weight with a contact area of 1 square inch is dropped freely onto the plate transferring the impact energy through the plate to the cutter edge. The test is first conducted at 3.25" drop. After 10 successful drops, the weight release height is increased to 6.5" (26.2 Joules) with the cutter being checked for damage after each drop.

Experiments with 32 runs with the cutter of the present invention give an average impact strength to initial failure of 279.6 Joules with a standard deviation of 97.5 Joules. In another set of runs (4 totals) after initial failure, the average impact strength to final failure is 620.8 Joules, with a standard deviation of 68.75 Joules. The cutters of the present invention demonstrate surprising and significant improvement over the cutter of prior art. Experiments with 17 runs employing the cutters of the prior art give an impact strength to final failure of 155.3 Joules, and a standard deviation of 83.60 Joules.

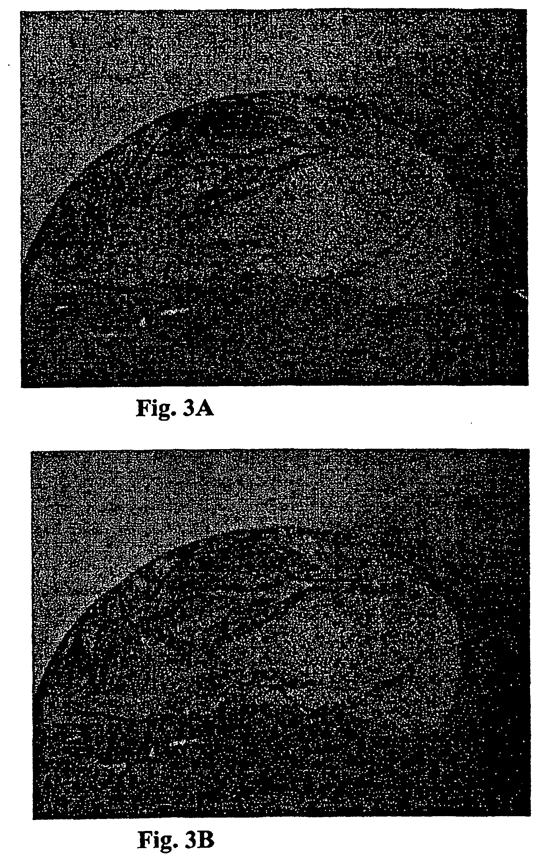

Figures 3A and 3B compare a standard cutter in the prior art (Figure 3A) and the high performance cutter of this example (Figure 3B). As shown in the photographs, minimal impact damage is seen even at 653 joules (with micro-chippage failure) in the high performance cutter of the invention while the standard cutter shows extensive diamond table spalling at 157 Joules.

*Parkson Mill Impact Resistance Test:* This test is to estimate the performance of the cutter on a chamfer piece, with each piece having a carbide chamfer of greater than about 0.2 mm, less than 1.0 mm radial or 45° on the locating base. The Diamond table has a 0.012" chamfer. In this test, the cutter (chamfered edge) sample is mounted in a steel holder, with Rake angle to work piece 7 deg radial/ 12 degrees axial. The cutter is rotated and cuts in an interrupted fashion at a depth of 0.150" and transverse distance of 0.010" through a granite work piece at a cutting speed of 320 rpm and feed rate of about 3" per min. (7.62 cm / min). The test is stopped when the diamond table fails, and the number of impacts (entries into the log) counted.

| Run # | Average Tool Efficiency | Overall tool Efficiency | Sample type |
|---|---|---|---|
| 1 | 7942.9 | 8896.3 | Prior art |
| 2 | 3292.3 | 2556.3 | Prior art |
| 3 | 7158.6 | 6394.4 | Prior art |
| 4 | 3683.3 | 3191.4 | Prior art |
| 5 | 8519.6 | 5590.2 | Prior art |
| 6 | 5455.2 | 7082.5 | Prior art |
| 7 | 4225 | 4050.6 | High Impact |
| 8 | 8519.5 | 5590.2 | High Impact |
| 9 | 3378.8 | 2753.3 | High Impact |
| 10 | 4475.7 | 3105.5 | High Impact |
| 11 | 4169.1 | 3336 | High Impact |
| 12 | 3038.8 | 2596.7 | High Impact |

*Abrasion Resistance Test:* In this test to measure the abrasion resistance, with each piece having a carbide chamfer of greater than about 0.2 mm, less than 1.0 mm radial or 45° on the locating base. First, a granite log is fitted to a lathe. The cutter (sharp edge) is mounted into a steel support. The cutter (rake angle 10 degrees) is run across the rotating log with a depth of cut of 0.010" at a speed of 300 surface feet per minute (sfpm). The size of the wear land on the cutter is measured after each pass of the log. The volume of material removed from the log is measured. The values are plotted against each other giving the abrasion resistance of the cutter.

Abrasion resistance of the cutter has been calculated, statistical anlyses are conducted and shown in the anova below. The p-value between the high performance and standard cutter indicates the difference in abrasion, while somewhat lower, is not significant. When testing the cutters of this invention, is interesting to note the presence of striations or grooves in the log where the whole crystals have taken material away. This feature indicates that the volume of material removed is greater than calculated using the typical two-dimensional measurement.

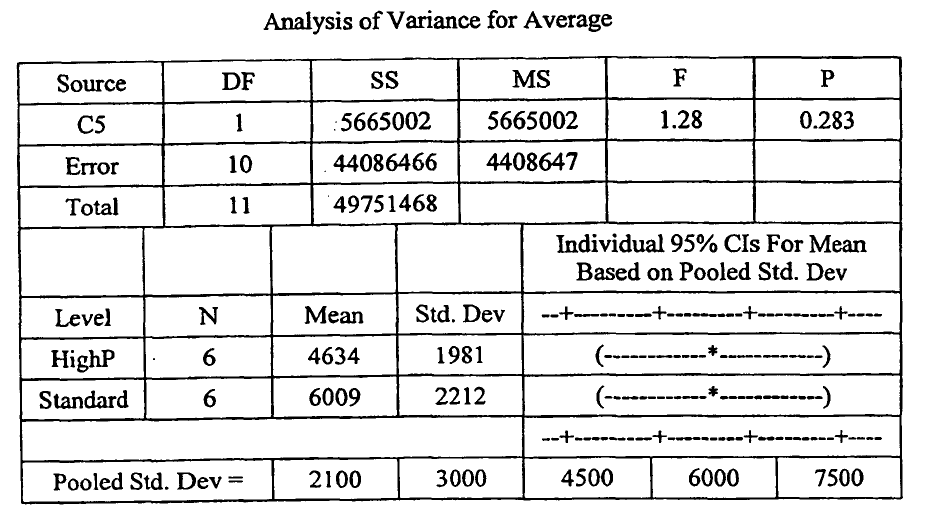

Some of the preferred embodiments have been set forth in this disclosure for the purpose of illustration. However, the foregoing description should not be deemed to be a limitation on the scope of the invention. Accordingly, various modifications, adaptations, and alternatives may occur to one skilled in the art without departing from the scope of the claimed inventive concept.

## Claims

1. A preform cutting element comprising a body of a superhard polycrystalline material comprising a plurality of diamond crystals, wherein said diamond crystals have
a particle size distribution in the range of about 60 to 100 microns; and
are **characterised in that** they have
a toughness index of at least about 50 measured by placing 2 carats of material in a capsule with a steel ball, agitating it vigorously for a fixed amount of time, and measuring the weight of fragments produced of a certain size with respect to a certain starting weight of a certain size, the size of the steel ball employed and the agitating time varying with the size of the diamond abrasive grains; and
an average aspect ratio of 0.80 or greater.

2. The cutting element of claim 1, wherein said polycrystalline body comprises a plurality of diamond crystals having a particle size distribution in the range of about 70 to 90 microns.

3. The cutting element of claim 2, wherein said polycrystalline body comprises a plurality of diamond crystals having an average aspect ratio of at least 0.85.

4. The cutting element of claim 2, wherein said polycrystalline body comprises a plurality of diamond crystals having a toughness index of at least about 60.

5. A tool comprising the preform cutting element of claim 1.

6. The preform cutting element of claim 1, wherein the cutting element is mounted upon a cutting face of a drill bit.

7. The preform cutting element of claim 1, further comprising a cutting surface adapted for use as a cutting insert in a machining operation.

8. The preform cutting element of claim 1, further comprising an additive material prior to formation of the cutting element in a high pressure high temperature operation.

## Patentansprüche

1. Ein Vorformungsschneidelement, das einen Körper aus einem superharten polykristallinen Material beinhaltet, das eine Vielzahl von Diamantkristallen beinhaltet, wobei die Diamantkristalle Folgendes aufweisen:
eine Partikelgrößenverteilung im Bereich von ungefähr 60 bis 100 Mikrometer;
und **dadurch gekennzeichnet sind, dass** sie Folgendes aufweisen:
einen Zähigkeitsindex von mindestens ungefähr 50, der durch das Platzieren von 2 Karat Material in einer Kapsel mit einer Stahlkugel, das kräftige Rühren über einen festgelegten Zeitraum und das Messen des Gewichts der produzierten Fragmente einer bestimmten Größe in Bezug auf ein bestimmtes Ausgangsgewicht einer bestimmten Größe gemessen wird, wobei die Größe der eingesetzten Stahlkugel und die Rührzeit mit der Größe der diamantenen Schleifkörner variieren; und
ein durchschnittliches Längenverhältnis von 0,80 oder größer.

2. Schneidelement gemäß Anspruch 1, wobei der polykristalline Körper eine Vielzahl von Diamantkristallen beinhaltet, die eine Partikelgrößenverteilung im Bereich von ungefähr 70 bis 90 Mikrometer aufweisen.

3. Schneidelement gemäß Anspruch 2, wobei der polykristalline Körper eine Vielzahl von Diamantkristallen beinhaltet, die ein durchschnittliches Längenverhältnis von mindestens 0,85 aufweisen.

4. Schneidelement gemäß Anspruch 2, wobei der polykristalline Körper eine Vielzahl von Diamantkristallen beinhaltet, die einen Zähigkeitsindex von mindestens ungefähr 60 aufweisen.

5. Ein Werkzeug, das das Vorformungsschneidelement aus Anspruch 1 beinhaltet.

6. Vorformungsschneidelement gemäß Anspruch 1, wobei das Schneidelement auf einer Schneidefläche einer Bohrkrone montiert ist.

7. Vorformungsschneidelement gemäß Anspruch 1, das ferner eine Schneideoberfläche beinhaltet, die zur Verwendung als ein Schneideinsatz in einem Bearbeitungsverfahren angepasst ist.

8. Vorformungsschneidelement gemäß Anspruch 1, das ferner vor der Bildung des Schneidelements in einem Verfahren unter hohem Druck und hoher Temperatur ein Zusatzstoffmaterial beinhaltet.

## Revendications

1. Un élément de coupe à comprimé comportant un corps d'une matière polycristalline extra-dure comportant une pluralité de cristaux de diamant, dans lequel lesdits cristaux de diamant ont
une distribution de tailles de particules dans la gamme allant d'environ 60 à 100 microns ;
et sont **caractérisés en ce qu'**ils ont
un index de résistance d'au moins environ 50 mesuré en plaçant 2 carats de matière dans une capsule avec une bille d'acier, en l'agitant vigoureusement pendant une durée fixe, et en mesurant le poids des fragments produits d'une certaine taille par rapport à un certain poids de départ d'une certaine taille, la taille de la bille d'acier utilisée et le temps d'agitation variant avec la taille des grains abrasifs de diamant ; et
un rapport d'aspect moyen de 0,80 ou plus.

2. L'élément de coupe de la revendication 1, dans lequel ledit corps polycristallin comporte une pluralité de cristaux de diamant ayant une distribution de tailles de particules dans la gamme allant d'environ 70 à 90 microns.

3. L'élément de coupe de la revendication 2, dans lequel ledit corps polycristallin comporte une pluralité de cristaux de diamant ayant un rapport d'aspect moyen d'au moins 0,85.

4. L'élément de coupe de la revendication 2, dans lequel ledit corps polycristallin comporte une pluralité de cristaux de diamant ayant un index de résistance d'au moins environ 60.

5. Un outil comportant l'élément de coupe à comprimé de la revendication 1.

6. L'élément de coupe à comprimé de la revendication 1, dans lequel l'élément de coupe est monté sur une face de coupe d'un foret.

7. L'élément de coupe à comprimé de la revendication 1, comportant de plus une surface de coupe adaptée pour être utilisée en tant qu'insert de coupe dans une opération d'usinage.

8. L'élément de coupe à comprimé de la revendication 1, comportant de plus une matière additive préalablement à la formation de l'élément de coupe dans une opération à haute pression et haute température.
